Europäisches Patentamt

European Patent Office

Office européen des brevets

(19)

(11) Publication number:

**0 192 356**
A2

(12) **EUROPEAN PATENT APPLICATION**

(21) Application number: 86300552.6

(22) Date of filing: 28.01.86

(51) Int. Cl.⁴: **C 08 L 59/00**
**C 08 L 51/04, C 08 K 3/26**

(30) Priority: 04.02.85 JP 19766/85

(43) Date of publication of application:
27.08.86 Bulletin 86/35

(84) Designated Contracting States:
BE DE FR GB IT NL

(71) Applicant: POLYPLASTICS CO. LTD.
30 Azuchimachi 2-chome
Higashi-ku Osaka-shi(JP)

(72) Inventor: Ikenaga, Yukio
324, Miyashita
Fuji-shi Shizuoka(JP)

(72) Inventor: Yamawaki, Masami
94-2, Gokanjima
Fuji-shi Shizuoka(JP)

(74) Representative: Livsey, Gilbert Charlesworth
Norris et al,
HYDE, HEIDE & O'DONNELL 146 Buckingham Palace
Road
London SW1W 9TR(GB)

(54) Polyacetal resin composition.

(57) A polyacetal resin composition comprises polyacetal
and a two- or more-stage polyacrylate comprising a rubber-
like first stage and a thermoplastic rigid final stage. It is
useful for an impact resistant metallized article.

EP 0 192 356 A2

Croydon Printing Company Ltd

POLYACETAL RESIN COMPOSITION

This invention relates to a polyacetal resin composition suitable for use in the field of metallized articles.

Polyacetals have many excellent characteristics, such as mechanical, anti-static, thermal, long-term, and molding properties. They are therefore, widely utilized as engineering plastics for functional components in various industrial fields, such as machine parts and electrical components. In such areas as automotive vehicle parts, where impact resistance is required, polyacetal resins are used effectively, and in order to give an appealing appearance to such parts, it is a current practice to metallize the polyacetal resin. In this connection, there has hitherto been much research into metallizing techniques and other areas.

Generally, however, metallizing of a polyacetal resin results in a lowering of its impact resistance, which is an otherwise advantageous characteristic feature of the resin. For some products, therefore, metallizing has been considered undesirable. There are, for example, many automotive vehicle parts for which any deterioration in impact performance due to metallizing is disfavoured.

In view of the aforesaid difficulty, one object of the present invention is the provision of metallized products having excellent impact properties. As a result, it has been found possible to obtain a metallized product having excellent impact properties by using, for a product which is to be metallized, a polyacetal resin composition incorporating a specific polyacrylate resin.

Accordingly, a polyacetal resin composition, of the invention, comprises 50 to 99.5 percent by weight of polyacetal and 0.5 to 50 percent by weight of a two or more stage polyacrylate comprising a rubber-like first stage and a thermoplastic rigid final stage.

The polyacrylate is preferred to be a two-stage polymer which has been obtained by polymerizing monomers such as, butyl acrylate, butylene diacrylate and allyl methacrylate or di-allyl maleate in the first stage and polymerizing methyl methacrylate in the final stage.

That is, one aspect of the invention provides a polyacetal composition comprising 0.5 to 50 percent by weight of a particular polyacrylate-resin based modifier incorporated into a polyacetal, and more specifically, a polyacetal resin composition wherein the polyacetal resin contains 0 to 10 percent by weight of an inorganic substance, or more particularly calcium carbonate.

The invention will now be described in more detail.

The modifier composed of a particular polyacrylate resin is advantageously a multi-stage polymer having a rubber-like first stage and a thermoplastic rigid final stage. One or more intermediate stages may be selected. For example, an intermediate stage may be a polymerization of about 75 to 100 percent by weight of styrene. However, a particularly preferred polyacrylate-based modifier consists of a two-stage polymer, the first stage being a polymerization of monomers including a butyl acrylate and a butylene diacrylate as a crosslinking agent, and allyl methacrylate or diallyl maleate as a grafting agent.

For such a multi-stage polymer having a rubber-like first stage and a thermoplastic rigid final stage, Acryloid KM330, a product of Rohm & Haas (U.S. Pat. No. 4,096,202) can be used in the composition of the present invention. The modifier composed of such polyacrylate resin is added in a proportion of 0.5 to 50 percent by weight relative to the entire amount of the composition. If the addition is less than 0.5 percent by weight, there is no noticable improvement in the impact property, and if the addition is more than 50 percent by weight, it may be unfavourably reflected in the physical properties of the molded product. Preferably, the addition should be within the range of 3 to 15 percent by weight. If the plate adhesion of the metallized article is considered, an optimum range of addition is 5 to 15 percent by weight.

A polyacetal used in the composition of this invention may be a homopolymer or a copolymer. There is no particular limitation in respect of polymerization degree; the polyacetal is acceptable if it has a fair molding fluidity and if it has suitable mechanical properties for the intended product. The resin may contain other components such as a lubricant and a stabilizer. For the purpose of the invention in particular, it is preferable to use a polyacetal resin containing an inorganic substance. Among useful inorganic substances are calcium carbonate, glass, silica, talc, and pumice; more particularly, calcium carbonate is preferred. Such polyacetal resin presents a moderately rough surface after it has been subjected to pre-metallizing surface treatment, that is to say, etching, and has high activity; therefore, it exhibits very high plate adhesion. In the case of calcium carbonate being incorporated by addition into the polyacetal resin, for example, the effect of calcium carbonate on plate adhesion is satisfactory where the addition is 1 to 10 percent by weight relative to the composition as a whole; and good surface luster effect is also obtainable in that case. If the addition is more than 10 percent by weight, no stable plate adhesion can be obtained, nor is it possible to obtain a good surface effect.

Addition of an inorganic substance also contributes towards improving the rigidity of molded products and reducing possible dimensional change.

Preferably, the inorganic substance has a particle diameter, in the range of between tens of millimicrometres ($m\mu m$) and say ten odd micrometres ($\mu m$); in the case of calcium carbonate, for example, heavy calcium carbonate, coke, and light calcium having a particle diameter of tens of micrometres ($\mu m$). Also various synthetics of the type having a particle diameter ranging from ten millimicrometres ($m\mu m$) to hundreds of millimicrometres ($m\mu m$), may be considered. In respect of plate adhesion, coarse particles (one micrometre ($\mu m$) to ten odd micrometres ($\mu m$)), are preferable, but if a luster effect on the metallized product is desired, fine-particle calcium carbonate is preferred, rather than heavy calcium carbonate.

The composition of this invention can be prepared in various ways. For example, the resin component and the modifier are melted and kneaded and then extruded into pellets by means of an extruder, which pellets are then turned out into moldings by using a molding machine. The composition of the invention can be satisfactorily metallized according to any known method.

Metallizing can be performed with a good plate adhesion effect by passing through such stages as degreasing, acid etching, washing, sensitizing, activation, or a combination of sensitizing and activation, such as, catalyst treatment, electroless plating, and electroplating. Preferably, etching by acid is carried out by dipping in a mixed solution of hydrochloric acid and sulfuric acid, for example, a mixed solution containing concentrated hydrochloric acid, concentrated sulfuric acid, and water in the ration of 1 : 1 : 2 by volume (about 8.6 wt % HCl + about 35.3 wt % $H_2SO_4$) for 5 to 30 minutes.

The invention will now be illustrated by the following examples and comparative examples; it is noted, however, that the invention is not limited by these examples.

To a polyacetal copolymer resin were added a polyacrylate-based modifier consisting of a multi-stage polymer having a rubber-like first stage and a thermoplastic rigid final stage (Acryloid KM330, a product of Rohm & Haas) and calcium carbonate in such ratio as shown in Table 1. The mixture was melted, kneaded, and extruded into a molding by an extruder; the molding was annealed and degreased, and then subjected to etching; subsequently, the stock was subjected to catalyst treatment and finally to metallizing. The metallized product thus obtained was tested for measurement as to Izod impact strength (notched). Also, a scar 1 cm in length, extending from the plated surface to the resin layer was given to the metallized product by using a knife, and the load required in peeling off the plate was measured for evaluation of the plate adhesion.

For comparison purposes, similar tests were made with a system incorporating no polyacrylate-based modifier and one incorporating a polyurethane instead of such a modifier. The test results are shown in Table 1.

Table 1

| | Composition (wt %) | | | Property | | |
|---|---|---|---|---|---|---|
| | Polyacetal copolymer resin | Calcium * carbonate | Acryloid KM330 | Izod impact strength notched (kg·cm/cm) | | Plate adhesion (g/cm) |
| | | | | Before plating | After plating | |
| Example 1 | 93 | 2 | 5 | 6.3 | 4 | 2.4 |
| Example 2 | 88 | 2 | 10 | 6.8 | 4.5 | 2.1 |
| Example 3 | 83 | 2 | 15 | 6.9 | 4.5 | 1.4 |
| Comp. Example 1 | 98 | 2 | 0 | 4.9 | 2 | 2.4 |
| Example 4 | 95 | 0 | 5 | 6.3 | 4 | 1.4 |
| Example 5 | 94 | 1 | 5 | 6 | 4 | 2 |
| Example 6 | 80 | 10 | 10 | 5.7 | 3.3 | 2.1 |
| Comp. Example 2 | 93 | 2 | Polyurethane 5 | 6.5 | 3.5 | 0.8 |

* Mean particle diameter 1 $\mu$m

## CLAIMS

1.    A polyacetal resin composition which comprises 50 to 99.5 percent by weight of polyacetal and 0.5 to 50 percent by weight of a two or more stage polyacrylate comprising a rubber-like first stage and a thermoplastic rigid final stage.

2.    A polyacetal resin composition as claimed in Claim 1, in which said polyacrylate is a two-stage polymer which has been obtained by polymerizing monomers such as butyl acrylate, butylene diacrylate and allyl methacrylate or di-allyl maleate in the first stage and polymerizing methyl methacrylate in the final stage.

3.    A polyacetal resin composition as claimed in Claim 1 wherein the polyacrylate is a multi-stage polymer with one or more intermediate stages included in the compostion.

4.    A polyacetal resin composition as claimed in Claims 1 and 3, wherein an intermediate stage is a polymerisation of 75 to 100 percent by weight of styrene.

5.    A polyacetal resin composition as claimed in Claim 1 wherein the polyacetal may be a homopolymer or a copolymer.

6.    A polyacetal resin composition as claimed in Claim 1 or 2, which further comprises an inorganic substance.

7.    A polyacetal resin composition as claimed in Claim 1 or 2, which further comprises 1 to 10 percent by weight relative to the composition as a whole of calcium carbonate.

8.    A polyacetal resin composition as claimed in Claim 1 which further comprises one or more of any known lubricant, stabilizer or filler means.

9.    A polyacetal resin composition according to claim 1,and substantially as described with reference to any one of the foregoing Examples 1 to 6.